# EUROPEAN PATENT APPLICATION

(11) **EP 4 787 913 A1**
(43) Date of publication of application: **05.08.2026**
(21) Application number: 24881708.2
(22) Date of filing: 24.10.2024
(51) Int. Cl.: H04W 8/16

(54) **COMMUNICATION METHOD AND APPARATUS**

(30) Priority: 26.10.2023 CN 202311402848
(71) Applicant: HUAWEI TECHNOLOGIES CO., LTD., Shenzhen 518129 (CN)
(72) Inventor: QIAO, Yunfei, Shenzhen, Guangdong 518129 (CN); WANG, Yu, Shenzhen, Guangdong 518129 (CN)
(74) Representative: Pfenning, Meinig & Partner mbB
(86) International application number: PCT/CN2024/127151
(87) International publication number: WO 2025/087347

(57) **Abstract**

Embodiments of this application provide a communication method and apparatus, to improve data forwarding efficiency. The method may be performed by a first access network device. The first access network device may be, for example, located on the ground (or is a terrestrial access network device), for example, a terrestrial base station. Alternatively, the first access network device is, for example, a non-terrestrial access network device, for example, a high-altitude platform or a satellite on which a base station or a part of base station functions are deployed. The method includes: receiving a first identifier and first data from a first terminal device, where the first identifier is an identifier of a first RB, and the first RB is an RB corresponding to the first terminal device; and sending a second identifier and the first data to a second terminal device or a second access network device based on the first identifier, where the second access network device is an access network device accessed by the second terminal device, the second identifier is an identifier of a second RB, and the second RB is an RB corresponding to the second terminal device.

## Description

### CROSS-REFERENCE TO RELATED APPLICATIONS

This application claims priority to Chinese Patent Application No. 202311402848.2, filed with the China National Intellectual Property Administration on October 26, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A 5th generation mobile communication system local area network (5th Generation local area network, 5G LAN) service is a service provided by a 5G system, and can provide private communication of an internet protocol (internet protocol, IP) type or an ethernet (ethernet) type for terminal devices (user equipment, UE) belonging to a same 5G virtual network (5G virtual network, 5G VN) group. For example, terminal devices in a factory constitute a 5G VN group, and the terminal devices belonging to the 5G VN group may send ethernet data packets or IP data packets to each other.

In a 5G LAN, data packets transmitted between terminal devices in a 5G VN group may be forwarded in a forwarding manner such as local forwarding or N19 tunnel-based forwarding. However, how to improve data forwarding efficiency is an urgent problem to be resolved.

### SUMMARY

Embodiments of this application provide a communication method and apparatus, to improve data forwarding efficiency.

According to a first aspect, a communication method is provided. The method may be performed by a first access network device. The first access network device may be, for example, located on the ground (or is a terrestrial access network device), for example, a terrestrial base station. Alternatively, the first access network device is, for example, a non-terrestrial access network device, for example, a high-altitude platform or a satellite on which a base station or some base station functions are deployed. The method includes: receiving a first identifier and first data from a first terminal device, where the first identifier is an identifier of a first radio bearer (radio bearer, RB), and the first RB is an RB corresponding to the first terminal device; and sending a second identifier and the first data to a second terminal device or a second access network device based on the first identifier, where the second access network device is an access network device accessed by the second terminal device, the second identifier is an identifier of a second RB, and the second RB is an RB corresponding to the second terminal device.

In this embodiment of this application, the access network device may send the data to the second terminal device or the second access network device based on the identifier of the RB corresponding to the first terminal device, and does not need to send the data to a core network device. For example, the data does not need to be sent to a user plane function (user plane function, UPF) unit for data forwarding. This reduces a data transmission delay, and improves data forwarding efficiency.

In a possible implementation, the first identifier is associated with the second identifier. The first access network device may configure an association relationship between the first identifier and the second identifier, so that the first access network device may forward the first data based on the association relationship upon receiving the first identifier from the first terminal device. In addition, the first access network device may send the second identifier to the second terminal device based on the association relationship, so that the second terminal device may parse the first data based on the second identifier. For example, the second terminal device may determine, based on the second identifier, the second RB used to parse the first data.

In a possible implementation, the first access network device may further receive first indication information from the core network device, where the first indication information indicates the first access network device to send the first data to the second terminal device or the second access network device. The core network device determines that the first access network device forwards data between the first terminal device and the second terminal device, so that higher security is achieved.

In a possible implementation, that the first indication information indicates the first access network device to send the first data to the second terminal device or the second access network device includes the following: The first indication information indicates that a first data path corresponding to a first quality of service QoS flow is associated with a second data path corresponding to a second QoS flow, and the first data path and the second data path are used to transmit the first data. The core network device may indicate the first access network device to forward all data between the two terminal devices. Alternatively, the core network device may indicate the first access network device to forward some data between the two terminal devices. For example, the core network device indicates the first access network device to forward data transmitted on data paths corresponding to two QoS flows, and other data is still forwarded by the core network device. In this way, data forwarding efficiency can be improved for data with a low security requirement, and data security can also be ensured for data with a high security requirement.

In a possible implementation, the first QoS flow is associated with the first RB, and the second QoS flow is associated with the second RB. After associating the data transmission path corresponding to the first QoS flow with the data transmission path corresponding to the second QoS flow, the first access network device associates the first QoS flow with the first RB, and associates the second QoS flow with the second RB, to obtain an association relationship between the first RB and the second RB.

In a possible implementation, the first access network device may further send the first identifier to the first terminal device. In this way, upon receiving the first identifier from the first terminal device, the first access network device may forward data based on the first identifier, for example, may forward data based on the association relationship between the first identifier and the second identifier.

In a possible implementation, before sending the second identifier and the first data to the second terminal device, the first access network device may further send the second identifier to the second terminal device. In this way, upon receiving the second identifier and the first data, the second terminal device may determine, based on the second identifier, the second RB used to parse the first data.

In a possible implementation, the first access network device may further receive first routing information from the core network device, where the first routing information indicates a path used by the first access network device to send the first data to the second terminal device or the second access network device; and sending the first data to the second terminal device or the second access network device includes: sending the first data to the second terminal device or the second access network device based on the first routing information. A distance between the first access network device and the second access network device may be far. The first access network cannot directly send data to the second access network device, and needs to forward the data through another access network device. Therefore, the core network device may indicate the first access network device to send routing information of the data to the second access network device, to implement multi-hop forwarding of the data, and complete direct communication between the first terminal device and the second terminal device.

In a possible implementation, the first access network device may further receive a third identifier from the first terminal device, where the third identifier is an identifier of the second terminal device. When the first access network device needs to send the data to the second access network device through the another access network device (for example, a third access network device), the third access network device may determine, based on the identifier of the second terminal device, routing information for forwarding, to implement data forwarding between access network devices.

According to a second aspect, a communication method is provided. The method may be performed by a first terminal device. The method includes: sending a first identifier and first data to a first access network device, where the first identifier is an identifier of a first RB, and the first RB is an RB corresponding to the first terminal device.

In a possible implementation, the first terminal device may further receive the first identifier from the first access network device.

In a possible implementation, the method includes: receiving first indication information from a core network device, where the first indication information indicates that a first data path corresponding to a first QoS flow is associated with a second data path corresponding to a second QoS flow.

For technical effects brought by the second aspect or the optional implementations, refer to the descriptions of the technical effects of the first aspect or the corresponding implementations.

According to a third aspect, a communication method is provided. The method may be performed by a core network device. The method includes: sending first indication information to a first access network device, where the first indication information indicates the first access network device to send first data to a second terminal device or a second access network device, and the second access network device is an access network device accessed by the second terminal device.

In a possible implementation, that the first indication information indicates the first access network device to send the first data to the second terminal device or the second access network device includes the following: The first indication information indicates that a first data path corresponding to a first QoS flow is associated with a second data path corresponding to a second QoS flow, and the first data path and the second data path are used to transmit the first data.

In a possible implementation, the core network device may further send the first indication information to a first terminal device and the second terminal device.

In a possible implementation, the core network device may further determine first routing information used by the first access network device to send the first data to the second terminal device or the second access network device.

In a possible implementation, the core network device may further send the first routing information to an access network device indicated by the first routing information, where the access network device indicated by the first routing information includes the first access network device.

For technical effects brought by the third aspect or the optional implementations, refer to the descriptions of the technical effects of the first aspect or the corresponding implementations.

According to a fourth aspect, a communication method is provided. The method may be performed by a first access network device. For a description of the first access network device, refer to the first aspect. The method includes: receiving first data sent by a first terminal device through a first logical channel or a first secondary carrier; and sending the first data to a second terminal device through a second logical channel or a second secondary carrier, where the first logical channel is associated with the second logical channel, and the first secondary carrier is associated with the second secondary carrier.

In this embodiment of this application, upon receiving the first data transmitted by the first terminal device through the configured dedicated logical channel or the configured secondary carrier, the first access network device may send the first data to the second terminal device based on an association relationship between the logical channels or an association relationship between the secondary carriers, and does not need to send the first data to a core network device, thereby improving data forwarding efficiency.

In a possible implementation, the first access network device may further receive first indication information from the core network device, where the first indication information indicates the first access network device to send the first data to the second terminal device. The core network device determines that the first access network device forwards data between the first terminal device and the second terminal device, so that higher security is achieved.

According to a fifth aspect, a communication method is provided. The method may be performed by a first terminal device. The method includes: sending first data to a first access network device through a first logical channel or a first secondary carrier, where the first logical channel or the first secondary carrier is a logical channel or a secondary carrier that is configured by the first access network device and that is used to send the first data to a second terminal device.

For technical effects brought by the fifth aspect or the optional implementations, refer to the descriptions of the technical effects of the fourth aspect or the corresponding implementations.

According to a sixth aspect, a communication method is provided. The method may be performed by a core network device. The method includes: sending first indication information to a first access network device, where the first indication information indicates the first access network device to send first data to a second terminal device or a second access network device, and the first data is data sent by the first terminal device to the second terminal device.

For technical effects brought by the sixth aspect or the optional implementations, refer to the descriptions of the technical effects of the fourth aspect or the corresponding implementations.

According to a seventh aspect, a communication system is provided, including a first access network device configured to perform the method according to any implementation of the first aspect, a first terminal device configured to perform the method according to any implementation of the second aspect, and a core network device configured to perform the method according to any implementation of the third aspect.

According to an eighth aspect, an embodiment of this application provides a communication system, including a first access network device configured to perform the method according to any implementation of the fourth aspect, a first terminal device configured to perform the method according to any implementation of the fifth aspect, and a core network device configured to perform the method according to any implementation of the sixth aspect.

According to a ninth aspect, a communication apparatus is provided. The communication apparatus may be the first access network device in the first aspect and/or the fourth aspect, or a communication device including the first access network device, or a functional module in the first access network device, for example, a baseband apparatus or a chip system. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

The transceiver unit (or the receiving unit) is configured to receive a first identifier and first data from a first terminal device, where the first identifier is an identifier of a first radio bearer RB, and the first RB is an RB corresponding to the first terminal device; and the processing unit is configured to control, based on the first identifier, the transceiver unit (or the sending unit) to send a second identifier and the first data to a second terminal device or a second access network device, where the second access network device is an access network device accessed by the second terminal device, the second identifier is an identifier of a second RB, and the second RB is an RB corresponding to the second terminal device.

Alternatively, the transceiver unit (or the receiving unit) is configured to receive first data through a first logical channel or a first secondary carrier; and the transceiver unit (or the sending unit) is configured to send the first data to a second terminal device through a second logical channel or a second secondary carrier, where the first logical channel is associated with the second logical channel, and the first secondary carrier is associated with the second secondary carrier.

In an optional implementation, the communication apparatus further includes a storage unit (also referred to as a storage module sometimes), and the processing unit is configured to: be coupled to the storage unit, and execute a program or instructions in the storage unit, to enable the communication apparatus to perform a function of the first access network device in the first aspect and/or the fourth aspect.

According to a tenth aspect, another communication apparatus is provided. The communication apparatus may be the first terminal device in the second aspect and/or the fifth aspect, or a communication device including the first terminal device, or a functional module in the first terminal device, for example, a baseband apparatus or a chip system. The communication apparatus includes a transceiver unit (also referred to as a transceiver module sometimes). For a description of the transceiver unit, refer to the seventh aspect.

The transceiver unit (or a sending unit) is configured to send a first identifier and first data to a first access network device, where the first identifier is an identifier of a first RB, and the first RB is an RB corresponding to the first terminal device.

Alternatively, the transceiver unit (or a sending unit) is configured to send first data to a first access network device through a first logical channel or a first secondary carrier, where the first logical channel or the first secondary carrier is a logical channel or a secondary carrier that is configured by the first access network device and that is used to send the first data to a second terminal device.

In a possible implementation, the communication apparatus further includes a processing unit (also referred to as a processing module sometimes) and a storage unit (also referred to as a storage module sometimes). The processing unit is configured to: be coupled to the storage unit, and execute a program or instructions in the storage unit, to enable the communication apparatus to perform a function of the first terminal device in the second aspect and/or the fifth aspect.

According to an eleventh aspect, another communication apparatus is provided. The communication apparatus may be the core network device in the third aspect and/or the sixth aspect, or a communication device including the core network device, or a functional module in the core network device, for example, a baseband apparatus or a chip system. The communication apparatus includes a transceiver unit (also referred to as a transceiver module sometimes). For a description of the transceiver unit, refer to the seventh aspect.

The transceiver unit (or a sending unit) is configured to send first indication information to a first access network device, where the first indication information indicates the first access network device to send first data to a second terminal device or a second access network device, and the second access network device is an access network device accessed by the second terminal device; or the first indication information indicates that a first data path corresponding to a first QoS flow is associated with a second data path corresponding to a second QoS flow, the first data path and the second data path are used to transmit first data, and the first data is data sent by a first terminal device to the second terminal device.

Alternatively, the transceiver unit (or a sending unit) is configured to send first indication information to a first access network device, where the first indication information indicates the first access network device to send first data to a second terminal device or a second access network device, and the first data is data sent by a first terminal device to the second terminal device.

In a possible implementation, the communication apparatus further includes a processing unit (also referred to as a processing module sometimes) and a storage unit (also referred to as a storage module sometimes). The processing unit is configured to: be coupled to the storage unit, and execute a program or instructions in the storage unit, to enable the communication apparatus to perform a function of the first terminal device in the third aspect and/or the sixth aspect.

According to a twelfth aspect, a communication apparatus is provided. The communication apparatus may be an access network device, or may be a chip or a chip system used in an access network device. The communication apparatus includes a communication interface and a processor, and optionally, further includes a memory. The memory is configured to store a computer program, and the processor is coupled to the memory and the communication interface. When the processor reads the computer program or instructions, the communication apparatus is enabled to perform the method performed by the first access network device in the foregoing aspects.

According to a thirteenth aspect, a communication apparatus is provided. The communication apparatus may be a terminal device, or may be a chip or a chip system used in a terminal device. The communication apparatus includes a communication interface and a processor, and optionally, further includes a memory. The memory is configured to store a computer program, and the processor is coupled to the memory and the communication interface. When the processor reads the computer program or instructions, the communication apparatus is enabled to perform the method performed by the first terminal device in the foregoing aspects.

According to a fourteenth aspect, a communication apparatus is provided. The communication apparatus may be a core network device, or may be a chip or a chip system used in a core network device. The communication apparatus includes a communication interface and a processor, and optionally, further includes a memory. The memory is configured to store a computer program, and the processor is coupled to the memory and the communication interface. When the processor reads the computer program or instructions, the communication apparatus is enabled to perform the method performed by the core network device in the foregoing aspects.

According to a fifteenth aspect, a communication system is provided, including a first terminal device, a first access network device, and a core network device. The first terminal device is configured to perform the communication method according to the second aspect and/or the fifth aspect, the first access network device is configured to perform the communication method according to the first aspect and/or the fourth aspect, and the core network device is configured to perform the communication method according to the third aspect and/or the sixth aspect.

According to a sixteenth aspect, a computer-readable storage medium is provided. The computer-readable storage medium is configured to store a computer program or instructions. When the computer program or the instructions are run, the method performed by the first terminal device, the first access network device, or the core network device in the foregoing aspects is implemented.

According to a seventeenth aspect, a computer program product including instructions is provided. When the computer program product runs on a computer, the method according to the foregoing aspects is implemented.

According to an eighteenth aspect, a chip system is provided, including a processor and an interface. The processor is configured to: invoke instructions from the interface and run the instructions, so that the chip system implements the method according to the foregoing aspects.

### BRIEF DESCRIPTION OF DRAWINGS

FIG. 1 is a diagram of a manner of data forwarding between terminals;
FIG. 2A is a diagram of a network architecture of a communication system to which an embodiment of this application is applicable;
FIG. 2B is a diagram of a network architecture of another communication system to which an embodiment of this application is applicable;
FIG. 2C is a diagram of inter-layer transmission of data sent by an access network device to a terminal device;
FIG. 3 is a flowchart of a communication method according to an embodiment of this application;
FIG. 4A, FIG. 4B, and FIG. 4C are diagrams of header formats of several data packets according to embodiments of this application;
FIG. 5 is a flowchart of another communication method according to an embodiment of this application;
FIG. 6 is a diagram of associating a first RB with a second RB according to an embodiment of this application;
FIG. 7 is a flowchart of still another communication method according to an embodiment of this application;
FIG. 8A and FIG. 8B are diagrams of two types of protocol layer entities according to embodiments of this application;
FIG. 9 is a diagram of inter-layer data transmission according to an embodiment of this application;
FIG. 10 is a flowchart of still another communication method according to an embodiment of this application;
FIG. 11 is another diagram of inter-layer data transmission according to an embodiment of this application;
FIG. 12 is a diagram of an apparatus according to an embodiment of this application; and
FIG. 13 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", namely, "one or more". "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)", "one or more items of", or a similar expression means any combination of these items, including a single item (piece) or any combination of a plurality of items (pieces). For example, at least one of a, b, or c, or one or more of a, b, or c represents a, b, c, a and b, a and c, b and c, or a, b, and c. Each of a, b, or c may be singular or plural.

Ordinal numbers such as "first" and "second" in embodiments of this application are intended to distinguish between a plurality of objects, but are not intended to limit sizes, content, an order, a time sequence, priorities, importance, or the like of the plurality of objects. In addition, step numbers in embodiments described in embodiments of this application are merely intended to distinguish between different steps, but are not intended to limit a sequence of the steps.

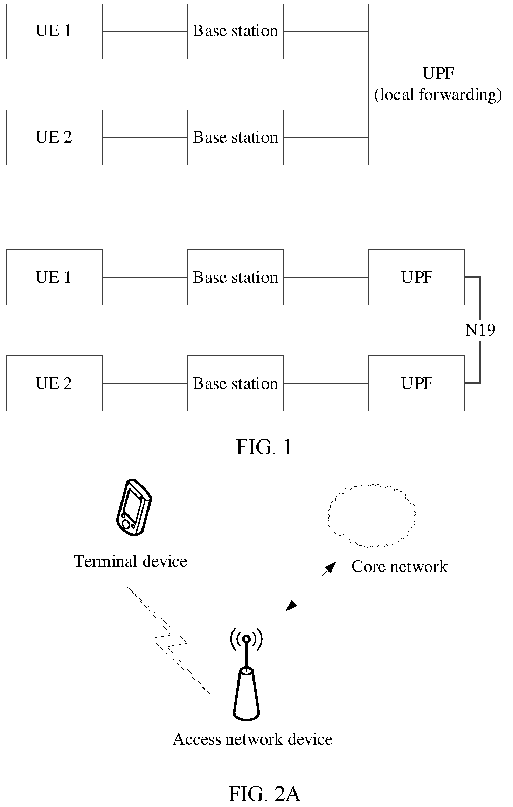

As described above, data transmitted between terminal devices in a 5G VN group may be forwarded in a forwarding manner such as local forwarding or N19 tunnel-based forwarding. For example, for procedures of local forwarding and N19 tunnel-based data forwarding, refer to FIG. 1. As shown in FIG. 1, when local forwarding or N19 tunnel-based forwarding is used, a data forwarding procedure is as follows: UE 1 sends data to a base station, and the base station forwards the data to a UPF; and after the data is forwarded locally or through an N19 tunnel, the UPF transmits the data back to the base station, and then the base station sends the data to UE 2.

To be specific, when the data is forwarded locally or through the N19 tunnel, the base station needs to send to-be-forwarded data to the UPF, and the UPF implements data forwarding. This results in a long delay and low efficiency in data transmission.

In addition, a conventional terrestrial network cannot provide a mobile communication network with seamless coverage for UE, especially in a place in which a base station cannot be deployed, for example, a sea, a desert, or the air. Therefore, a non-terrestrial network (non-terrestrial network, NTN) is introduced into a 5G system. In the NTN, a base station or some base station functions are deployed on a high-altitude platform or a satellite to provide a mobile communication network with seamless coverage for the UE. However, when the NTN is used for communication, in a process of local forwarding or N19 tunnel-based forwarding, the UE 1 sends data to the high-altitude platform or the satellite, and the high-altitude platform or the satellite sends the data to a UPF that is located on the ground and that is of a core network. After the data is forwarded locally or through the N19 tunnel, the UPF transmits the data back to the high-altitude platform or the satellite. However, a distance between the high-altitude platform or the satellite and the ground is very far. Transmitting the data by the high-altitude platform or the satellite to the UPF located on the ground leads to a longer delay and lower efficiency in data transmission. In addition, when all data is forwarded through the UPF, load of a backhaul link used when the UPF transmits data back to the base station is also large. However, if the UPF is deployed on the satellite, although a data transmission delay and backhaul load can be reduced, costs are high.

To resolve the technical problem, a communication method and apparatus in embodiments of this application are provided. The technical solutions provided in embodiments of this application may be applied to a long-term evolution (long-term evolution, LTE) system, a new radio (new radio, NR) communication system, an NTN system, vehicle-to-everything (vehicle-to-everything, V2X), an internet of vehicles, machine type communication (machine type communication, MTC), an internet of things (internet of things, IoT), machine-to-machine (machine-to-machine, M2M), or a future mobile communication system such as a 6th generation (6th generation, 6G) system.

Optionally, the NTN system may include a satellite system. Based on satellite altitudes, namely, satellite orbital heights, satellites may be classified into a highly elliptical orbit (highly elliptical orbit, HEO) satellite, a geostationary earth orbit (geosynchronous earth orbit, GEO) satellite, a medium earth orbit (medium earth orbit, MEO) satellite, a low earth orbit (low earth orbit, LEO) satellite, and the like. In addition, the NTN system may further include a high-altitude platform (high altitude platform station, HAPS) and the like. The NTN system in embodiments of this application is not limited to the foregoing examples.

FIG. 2A is a diagram of a network architecture of a communication system to which an embodiment of this application is applicable. The network architecture includes a terminal device, an access network device, and a core network device. The network architecture shown in FIG. 2A is merely an example. The terminal device accesses a core network through the access network device, and may communicate with a data network (data network, DN) and the like through the core network.

The terminal device includes a device that provides voice and/or data connectivity for users, specifically including a device that provides voice for users, or a device that provides data connectivity for users, or a device that provides both voice and data connectivity for users, for example, may include a handheld device with a wireless connection function, or a processing device connected to a wireless modem. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine type communication (machine-to-machine/machine-type communication, M2M/MTC) terminal device, an internet of things (internet of things, IoT) terminal device, a light terminal device (light UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, hand-held, or computer-embedded mobile apparatus. For example, the terminal device may be a device such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner. Optionally, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, a smart watch or smart glasses.

The terminal device located in a vehicle (for example, placed in the vehicle or installed in the vehicle) may be considered as a vehicle-mounted terminal device. The vehicle-mounted terminal device is referred to as, for example, an on-board unit (on-board unit, OBU). In embodiments of this application, the terminal device may further include a relay (relay) terminal device.

In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete device. In the technical solutions provided in embodiments of this application, an example in which the apparatus configured to implement the function of the terminal device is a terminal device is used for describing the technical solutions provided in embodiments of this application.

The access network device is a network-side device having a wireless transceiver function. The access network device may be an apparatus that is in a radio access network (radio access network, RAN) and that provides a wireless communication function for the terminal device, and is referred to as a RAN device. For example, the access network device may be a base station (base station), for example, an evolved NodeB (evolved NodeB, referred to as an eNB or an e-NodeB for short) in a long-term evolution LTE system or a long-term evolution-advanced (long-term evolution-advanced, LTE-A) system. The eNB is an apparatus that is deployed in a radio access network and that meets a 4G standard and provides a wireless communication function for the terminal device. The access network device may alternatively be a new radio controller (new radio controller, NR controller), a gNodeB (gNodeB, gNB) in a 5G system, a central network element (central unit), a new radio base station, a remote radio module, a micro base station (also referred to as a small cell), a relay (relay), a distributed network element (distributed unit), macro base stations in various forms, a transmission reception point (transmission reception point, TRP), a transmission measurement function (transmission measurement function, TMF), a transmission point (transmission point, TP), or any other radio access device. This is not limited in embodiments of this application.

The access network device may alternatively be a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a remote radio unit (remote radio unit, RRU), a Wi-Fi access point (access point, AP), a baseband pool (BBU pool) and an RRU in a cloud radio access network (cloud radio access network, CRAN), or the like. A specific technology and a specific device form that are used by the access network device are not limited in embodiments of this application. The access network device may correspond to an eNB in a 4G system, and correspond to a gNB in a 5G system.

In addition, the access network device in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a radio network, for example, based on functions of a packet data convergence protocol (packet data convergence protocol, PDCP) layer and a protocol layer above the packet data convergence protocol layer. For example, functions of a service data adaptation protocol (service data adaptation protocol, SDAP) layer are set on the CU, and functions of protocol layers below the PDCP layer, such as a radio link control (radio link control, RLC) layer and a media access control (media access control, MAC) layer, are set on the DU. It should be noted that such protocol layer division is merely an example, and division may alternatively be performed at another protocol layer. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plan, CP) and a user plane (user plan, UP) of the CU may be further separated into different entities for implementation, where the entities are respectively a control-plane CU entity (CU-CP entity) and a user-plane CU entity (CU-UP entity). In this network architecture, signaling generated by the CU may be sent to the terminal device through the DU, or signaling generated by the UE may be sent to the CU through the DU. The DU may transparently transmit the signaling to the terminal device or the CU by directly encapsulating the signaling at a protocol layer without parsing the signaling. In the network architecture, the CU is classified as a network device on a RAN side. In addition, the CU may alternatively be classified as a network device on a core network (core network, CN) side. This is not limited in this application.

In embodiments of this application, the access network device is an apparatus that may be configured to implement a function of the access network device, or may be an apparatus that can support the access network device in implementing the function, for example, a chip system. The apparatus may be installed in the access network device. The chip system may include a chip, or may include a chip and another discrete device. In embodiments of this application, the access network device is used an example of the apparatus configured to implement the function of the access network device to describe the technical solutions provided in embodiments of this application.

As a bearer network, the core network (core network, CN) provides an interface to the DN, provides communication connection, authentication, management, and policy control for the terminal device, bears a data service, and the like. The CN may include at least one core network device, for example, may include two types, namely, a user plane function network element (which may be referred to as a user plane network element for short) and a control plane function network element (which may be referred to as a control plane network element for short). The control plane function network element may include an access management network element, a session management network element, a unified data management network element, a policy control network element, and the like. It should be noted that the CN may include one or more CN devices. The CN device may be a network element configured to perform the foregoing single network function, or may be a network element configured to perform the foregoing plurality of network functions. When one CN device is configured to perform the foregoing plurality of network functions, the CN device may include one or more functional modules configured to perform the foregoing plurality of network functions. The functional module may be a software module, or may be a software/hardware module. This is not limited in embodiments of this application.

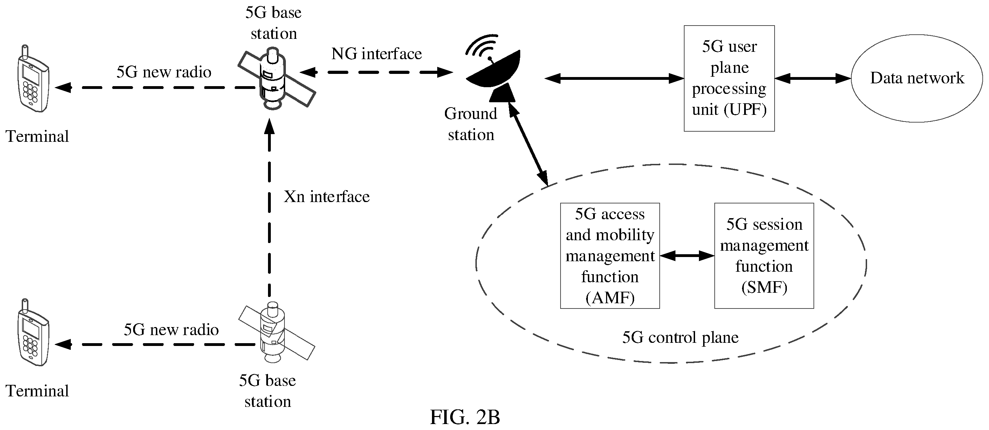

FIG. 2B is a diagram of a network architecture of another communication system according to an embodiment of this application. The communication system is, for example, the NTN system. In the network architecture shown in FIG. 2B, a terminal device located on the ground may access an NTN through 5G new radio. In the NTN, a 5G base station may be deployed on a satellite, and is connected, through a radio link, to a 5G core network located on the ground. In addition, there is a radio link between satellites. Therefore, exchange such as signaling exchange and user data transmission between base stations may be completed through the radio link. Network elements and interfaces in FIG. 2B are briefly described as follows.
(1) Terminal device: includes a mobile device that supports the 5G new radio. The terminal device may access an NTN through the 5G new radio and initiate a service, for example, making a call or accessing an internet. For a type included in the terminal device in embodiments of this application, refer to the terminal device in the network architecture shown in FIG. 2A.
(2) 5G base station: is a non-terrestrial access network device that mainly provides a radio access service. Like a terrestrial access network device, the non-terrestrial access network device may provide a radio coverage service for a terminal device, for example, scheduling a radio resource for an accessed terminal device, providing a reliable radio transmission protocol and a reliable data encryption protocol, and the like. The 5G base station in embodiments of this application may be implemented by deploying a 5G base station on a satellite or deploying some 5G base station functions on a satellite, to provide a communication network with seamless coverage for a terminal device.
(3) 5G core network: includes a 5G control plane and a 5G user plane function (UPF) unit, and is used for access control, mobility management, session management, user security authentication, charging, and other services. The 5G core network is, for example, the core network in the network architecture shown in FIG. 2A.
(4) Ground station: is mainly responsible for forwarding signaling and service data between a satellite and the 5G core network. In other words, a basic function of the ground station is to transmit a signal to the satellite and receive a signal forwarded by another ground station through the satellite.
(5) 5G new radio: indicates a radio link between a terminal device and the 5G base station, to implement services such as signaling exchange and user data transmission between the terminal device and the 5G base station through the 5G new radio.
(6) Xn interface: indicates an interface between 5G base stations, and is mainly used to implement signaling exchange such as handover.
(7) NG interface: indicates an interface between the 5G base station and the 5G core network, and is mainly used to exchange signaling or the like of a non-access stratum (non-access stratum, NAS) of the 5G core network and transmit service data of a user. Optionally, when the 5G base station interacts with a UPF network element of the 5G core network, an interface between the 5G base station and the UPF network element is, for example, an NG-U tunnel (tunnel) interface, where U is an abbreviation of the UPF network element.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

Communication between an access network device (for example, the access network device shown in FIG. 2A or the 5G base station shown in FIG. 2B) and a terminal device complies with a specific protocol layer structure. For example, data sent by the terminal device to the access network device needs to pass through a user plane protocol layer. A user plane protocol layer structure includes an SDAP layer, a PDCP layer, an RLC layer, a MAC layer, and a physical layer (physical layer, PHY)/PHY layer. Functions of one or more protocol layers may be implemented by one or more nodes of the access network device or the terminal device.

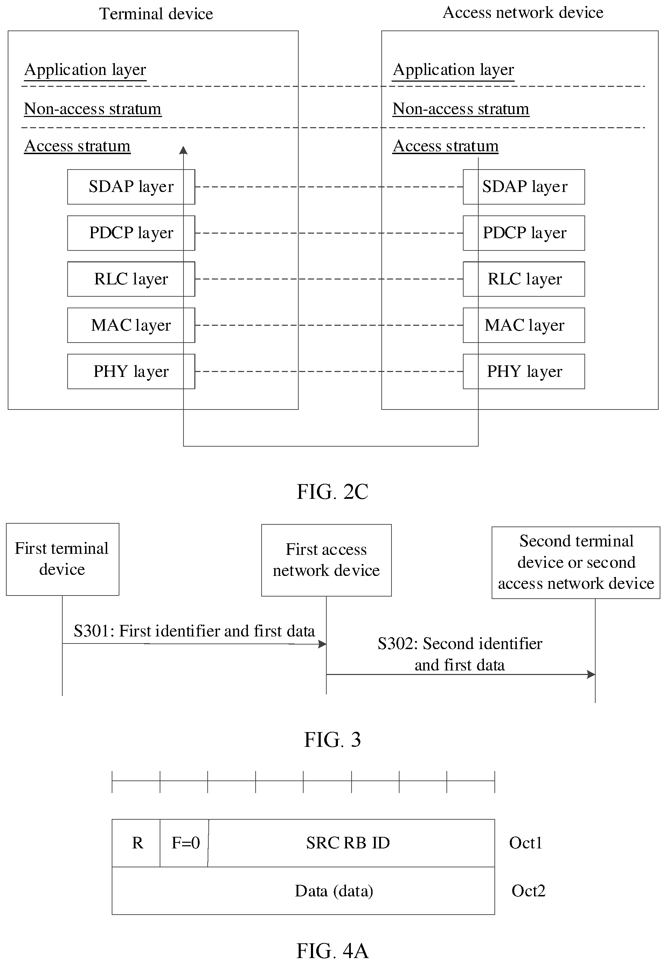

The SDAP layer, the PDCP layer, the RLC layer, the MAC layer, and the physical layer may also be collectively referred to as an access stratum. A data transmission direction is divided into sending or receiving, and each layer is further divided into a sending part and a receiving part. Data transmission is used as an example in the following. FIG. 2C is a diagram of inter-layer transmission of data sent by the access network device to the terminal device. In FIG. 2C, a downward arrow represents data sending, and an upward arrow represents data receiving. In embodiments of this application, the data sent by the access network device to the terminal device is also referred to as downlink data.

During downlink data transmission, after obtaining data from the SDAP layer, the PDCP layer transmits the data to the RLC layer and the MAC layer. The MAC layer generates a transport block (transport block, TB), and then wireless transmission is performed through the physical layer. Data is correspondingly encapsulated at each layer. Data received by a layer from an upper layer of the layer is considered as a service data unit (service data unit, SDU) of the layer. After being encapsulated at the layer, the data becomes a PHY PDU, and is then transferred to a next layer. For example, data received by the PDCP layer from an upper layer is referred to as a PDCP SDU, and data sent by the PDCP layer to a lower layer is referred to as a PDCP PDU; data received by the RLC layer from an upper layer is referred to as an RLC SDU, and data sent by the RLC layer to a lower layer is referred to as an RLC PDU; and data received by the MAC layer from an upper layer is referred to as a MAC SDU, and data sent by the MAC layer to a lower layer is referred to as a MAC PDU. The MAC PDU is also referred to as a transport block. In a protocol, layers correspond to each other in a form of channels. The RLC layer corresponds to the MAC layer through a logical channel (logical channel, LCH), the MAC layer corresponds to the physical layer through a transport channel (transport channel), and the physical layer corresponds to a physical layer at another end through a physical channel (physical channel) which is below the physical layer.

Similar to the access network device, an access stratum of the terminal device also includes an SDAP layer, a PDCP layer, an RLC layer, a MAC layer, and a physical layer. The terminal device further includes an application layer and a non-access stratum. The application layer may be used to provide a service for an application installed on the terminal device. For example, downlink data received by the terminal device may be sequentially transmitted from the physical layer to the application layer, and then provided by the application layer for the application. For another example, the application layer may obtain data (for example, a video recorded by a user by using the application) generated by the application, sequentially transmit the data to the physical layer, and send the data to another communication apparatus. The non-access stratum may be used to forward user data. For example, the non-access stratum forwards uplink data received from the application layer to the SDAP layer, or forwards downlink data received from the SDAP layer to the application layer.

The following describes in detail the communication method provided in embodiments of this application with reference to the accompanying drawings.

FIG. 3 is a flowchart of a communication method according to an embodiment of this application. The method may be applied to the network architecture shown in FIG. 2A or FIG. 2B. If the method is applied to the network architecture shown in FIG. 2A or FIG. 2B, in the following descriptions, a terminal device is the terminal device in the network architecture shown in FIG. 2A or FIG. 2B, a first access network device or a second access network device is the access network device in the network architecture shown in FIG. 2A or the 5G base station in the network architecture shown in FIG. 2B, and a core network device is the core network in the network architecture shown in FIG. 2A or the 5G core network in the network architecture shown in FIG. 2B.

S301: A first terminal device sends a first identifier and first data to the first access network device; and correspondingly, the first access network device receives the first identifier and the first data from the first terminal device.

At least one RB may be established between the first terminal device and the first access network device to transmit data. When sending data (for example, the first data) to the first access network device, the first terminal device may carry an identifier of an RB (for example, a first RB) used to transmit the first data, where the identifier of the first RB is, for example, the first identifier.

Optionally, the first terminal device may encapsulate the first identifier and the first data into a data packet (for example, a first data packet), and send the first data packet to the first access network device. For example, the first terminal device may carry the first identifier in a header of the first data packet. Alternatively, the first terminal device may send the first identifier and the first data to the first access network device in another sending manner. This is not specifically limited in embodiments of this application. In the following embodiment, an example in which the first terminal device sends the first data packet to the first access network device is used.

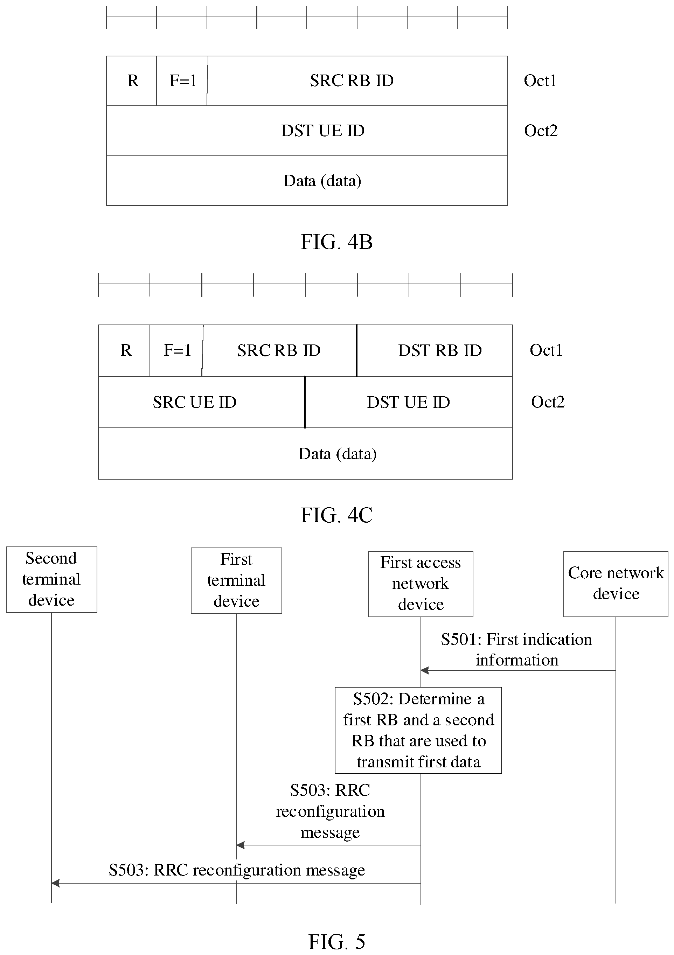

The header of the first data packet may further include a parameter, such as F, indicating a format of the header. A value of the parameter may indicate identification information included in the header of the first data packet. For example, if F=0, it indicates that the header of the first data packet includes the identifier of the first RB corresponding to the first terminal device, namely, the first identifier, but does not include an identifier (for example, a DST UE ID) of a destination (destination) terminal device. The destination terminal device is, for example, a second terminal device described below. The first terminal device is a source device that sends the first data packet. Therefore, the first terminal device may also be referred to as a source (source) terminal device, and the identifier of the first RB corresponding to the first terminal device is, for example, an SRC RB ID. If F=1, it indicates that the header of the first data packet includes the first identifier of the first RB, and further includes the identifier of the destination terminal device. For example, refer to FIG. 4A and FIG. 4B. In FIG. 4A and FIG. 4B, in a header, R is a reserved bit (reserve), Oct represents an octal byte (octal byte), and data (data) is data included in the first data packet, namely, the first data. In this way, in a process of parsing the first data packet, the first access network device may determine, based on the parameter, the identification information that needs to be obtained.

Optionally, the header of the first data packet may further include an identifier of the first terminal device and/or an identifier of an RB corresponding to the destination terminal device. The identifier of the first terminal device is, for example, an SRC UE ID, and the identifier of the RB corresponding to the second terminal device is, for example, a DST RB ID. If the header of the first data packet includes an SRC UE ID, the SRC UE ID and the DST UE ID may be included in a same field. If the header of the first data packet includes a DST RB ID, the DST RB ID and the SRC RB ID may be included in a same field. For example, for a format of the first data packet including the identifier of the first terminal device and/or the identifier of the RB corresponding to the destination terminal device, refer to FIG. 4C. For example, for explanations of content included in FIG. 4C, refer to the explanations of corresponding content in FIG. 4A and FIG. 4B. Details are not described herein again.

The first identifier is allocated by the first access network device. Therefore, optionally, before S301 is performed, the first terminal device may further receive the first identifier from the first access network device. For example, the first access network device may carry the first identifier in a radio resource control (radio resource control, RRC) reconfiguration message, and send the radio resource control reconfiguration message to the first terminal device. The RRC reconfiguration message is used to establish the first RB. Alternatively, the first access network device may carry the first identifier in other information and send the other information to the first terminal device. For example, after the first RB is established, the first access network device may send indication information to the first terminal device, to indicate that the identifier of the first RB is the first identifier. A manner in which the first access network device sends the first identifier to the first terminal device is not limited in this embodiment of this application.

Optionally, the first identifier may further include indication information indicating to multicast or broadcast the first data. For example, the first identifier includes 16 bits, where a 14^{th} bit and a 15^{th} bit are flag bits indicating broadcast or multicast. If the 14^{th} bit and the 15^{th} bit are 00, it indicates that the first data is not sent in a multicast or broadcast manner. If the 14^{th} bit and the 15^{th} bit are 01, it indicates that the first data is sent in a multicast manner. If the 14^{th} bit and the 15^{th} bit are 10, it indicates that the first data is sent in a broadcast manner.

S302: The first access network device sends a second identifier and the first data to the second terminal device or the second access network device based on the first identifier; and correspondingly, the second terminal device or the second access network device receives the second identifier and the first data from the first access network device.

Upon receiving the first identifier from the first terminal device, the first access network device may determine, based on the first identifier, the corresponding first RB, and may determine a service corresponding to data transmitted on the first RB. Upon determining the service corresponding to the data transmitted on the first RB, the first access network device may determine a receive end, for example, the second terminal device, configured to receive the data (namely, the first data) of the service. The first access network device may send the first data to the second terminal device. Optionally, an access network device accessed by the second terminal device may not be the first access network device, for example, may be the second access network device. In this case, the first access network device cannot directly send the first data to the second terminal device. Therefore, the first access network device may send the first data to the second access network device accessed by the second terminal device, and the second access network device sends the first data to the second terminal device. Alternatively, if the first identifier includes an identifier indicating multicast or broadcast, the first access network device may multicast or broadcast the first data. For example, if the first terminal device and the second terminal device belong to a same 5G VN group, and the 14^{th} bit and the 15^{th} bit in the first identifier are 01, the first access network device may send the first data to the second terminal device in a multicast manner. In the following embodiment, an example in which the first identifier does not include the identifier indicating multicast or broadcast is used.

When sending the first data to the second terminal device or the second access network device, the first access network device may carry the second identifier of a second RB corresponding to the second terminal device. In this way, upon receiving the first data, the second terminal device may determine, based on the second identifier, to process the first data by using a protocol entity corresponding to the second RB. A sending manner in which the first access network device sends the second identifier and the first data to the second terminal device or the second access network device may correspond to a sending manner in which the first terminal device sends the first identifier and the first data to the first access network device. For example, if the first terminal device encapsulates the first identifier and the first data into the first data packet and sends the first data packet to the first access network device, the first access network device also encapsulates the second identifier and the first data into a data packet (for example, a second data packet) and sends the data packet to the second terminal device, where a header of the second data packet carries the second identifier. Alternatively, a sending manner in which the first access network device sends the second identifier and the first data to the second terminal device may be decoupled from a sending manner in which the first terminal device sends the first identifier and the first data to the first access network device. The sending manner in which the first access network device sends the second identifier and the first data to the second terminal device is not limited in this embodiment of this application.

When the manner in which the first access network device sends the second identifier and the first data to the second terminal device or the second access network device corresponds to the manner in which the first terminal device sends the first data and the first identifier to the first access network device, that is, when the first access network device encapsulates the second identifier and the first data into the second data packet and sends the second data packet to the second terminal device or the second access network device, the first access network device may replace the first identifier carried in the header of the first data packet with the second identifier, to obtain the second data packet. Alternatively, if the header of the first data packet carries the second identifier, the first access network device may use the first data packet as the second data packet, or may delete the first identifier carried in the header of the first data packet to obtain the second data packet.

Optionally, if the first data packet received by the first access network device from the first terminal device includes an identifier of the second terminal device, the second data packet sent by the first access network device to the second terminal device or the second access network device may include the identifier of the second terminal device, or the second data packet may not include the identifier of the second terminal device. For example, if the access network device accessed by the second terminal device is the first access network device, or the access network device accessed by the second terminal device is the second access network device, but the first access network device can directly communicate with the second access network device, indicating that there is no requirement for determining the second terminal device or the second access network device based on the identifier of the second terminal device, the first access network device may delete the identifier of the second terminal device, to obtain the second data packet to be sent to the second terminal device, where the second data packet does not include the identifier of the second terminal device. Alternatively, the first access network device may not delete the identifier of the second terminal device, that is, the second data packet includes the identifier of the second terminal device. Optionally, after deleting the identifier of the second terminal device, the first access network device may further modify a value of F carried in the header to 0.

If the access network device accessed by the second terminal device is the second access network device, and the first access network device cannot directly communicate with the second access network device, that is, the first access network device needs to communicate with the second access network device through another access network device, when the another terminal device forwards the first data packet from the first access network device to the second access network device, the another access network device needs to determine the second access network device based on the identifier that is of the second terminal device and that is carried in the first data packet. Therefore, the second data packet may include the identifier of the second terminal device.

The second identifier is allocated by the first access network device. Therefore, optionally, before S301 or S302 is performed, the first access network device may further send the first identifier to the second terminal device. For example, the first access network device may include the second identifier in an RRC reconfiguration message, and send the RRC reconfiguration message to the second terminal device. The RRC reconfiguration message is used to establish the second RB. Alternatively, the first access network device may include the second identifier in other information and send the other information to the second terminal device. For example, after the second RB is established, the first access network device sends indication information to the first terminal device, to indicate that an identifier of the second RB is the second identifier. A manner in which the first access network device sends the second identifier to the second terminal device is not limited in this embodiment of this application.

Optionally, the first access network device may further configure the first identifier to associate with the second identifier. Upon determining that the identifier included in the first data packet is the first identifier, the first access network device may send the first data to the second terminal device or the second access network device based on an association relationship between the first identifier and the second identifier, and send the second identifier.

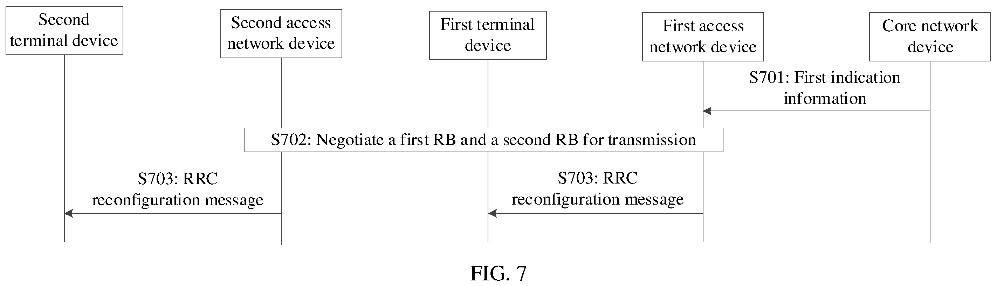

For communication security, data for communication between terminal devices is usually forwarded through a UPF of the core network device. Therefore, in this embodiment of this application, forwarding of the first data (namely, data for communication between the first terminal device and the second terminal device) through the first access network device may be indicated by the core network device. In addition, as described above, the second terminal device may be the accessed second access network device, that is, an access network device accessed by the second terminal device and an access network device accessed by the first terminal device may be the same or different. Therefore, optionally, before S301 or S302 is performed, steps shown in FIG. 5 or FIG. 7 may be further performed.

FIG. 5 is a flowchart of another communication method according to an embodiment of this application. In this method, an example in which a first terminal device and a second terminal device access a first access network device is used.

S501: A core network device sends first indication information to the first access network device; and correspondingly, the first access network device receives the first indication information from the core network device.

When the first terminal device wants to communicate with the second terminal device, a service request may be sent to the core network device. For example, the service request is used to request to transmit a first service with the second terminal device. The first service may be, for example, a voice call, file transfer, or another service. Upon receiving the service request, the core network device may determine, based on the service request, to forward data (for example, the first data) of the first service through an access network device or through a UPF. For example, if the first service is a service with a high security requirement, the core network device may determine to forward the first data through the UPF; or if the first service is a service with a low security requirement, the core network device may determine to forward the first data through the first access network device. Alternatively, when the first terminal device communicates with the second terminal device, if the core network device determines that load of a backhaul link of the UPF is high, the core network device may determine to forward the first data through the first access network device.

Upon determining to implement forwarding through the first access network device, the core network device may send the first indication information to the first access network device, to indicate the first access network device to send the first data to the second terminal device or a second access network device.

Optionally, if the core network device has configured, for the first terminal device and the second terminal device, a data path used to transmit the first data, the core network device may further indicate, in a manner of indicating the first access network device to associate data paths used to transmit the first data, the first access network device to send the first data to the second terminal device or the second access network device. In other words, the first indication information may indicate the first access network device to associate a first data path corresponding to a first QoS flow with a second data path corresponding to a second QoS flow. The first data path corresponding to the first QoS flow is, for example, a data path that is used to transmit the first data and that is between the first terminal device and the first access network device, and the second data path corresponding to the second QoS flow is, for example, a data path that is used to transmit the first data and that is between the second terminal device and the first access network device or the second access network device. Optionally, when the first indication information may indicate the first access network device to associate the first data path corresponding to the first QoS flow with the second data path corresponding to the second QoS flow, the core network device may further send the first indication information to the first terminal device and the second terminal device.

A plurality of services may be transmitted between the first terminal device and the second terminal device. For example, data of different services may be transmitted through data paths corresponding to different QoS flows. The core network device may indicate the first access network device to forward data transmitted through data paths corresponding to two QoS flows, that is, forward data of a service, and data transmitted through a data path corresponding to another QoS flow continues to be forwarded through the UPF of the core network device. In this way, when data forwarding efficiency of a service is improved, security of another service can be further ensured.

S502: The first access network device determines a first RB and a second RB that are used to transmit the first data.

After the first access network device receives the first indication information from the core network device, if the first indication information indicates to send the first data to the second terminal device or the second access network device, the first access network device may determine whether the first RB and the second RB that are used to transmit the first data exist in the first terminal device and the second terminal device. If the first RB and the second RB do not exist, the first access network device may establish, for the first terminal device, the first RB used to transmit the first data, and establish, for the second terminal device, the second RB used to transmit the first data. Optionally, if a second service has been transmitted between the first terminal device and the second terminal device, the first access network device may reuse RBs used to transmit data of the second service, that is, determine that the RBs used to transmit the data of the second service are the first RB and the second RB.

Optionally, if the first indication information indicates the first access network device to associate the first QoS flow with the second QoS flow, the first access network device may determine that an RB corresponding to the first data path corresponding to the first QoS flow is the first RB, and determine that an RB corresponding to the second data path corresponding to the second QoS flow is the second RB. Alternatively, the first access network device may configure (for example, create) the first RB for the first terminal device, and associate the first QoS flow with the first RB; and configure the second RB for the second terminal device, and associate the second QoS flow with the second RB. Associating the first QoS flow with the first RB is, for example, mapping the first data path corresponding to the first QoS flow to the first RB; and associating the second QoS flow with the second RB is, for example, mapping the second data path corresponding to the second QoS flow to the second RB.

After determining the first RB and the second RB that are used to transmit the first data, the first access network device may establish an association relationship between the first RB and the second RB. For example, the first access network device may associate a first identifier corresponding to the first RB with a second identifier corresponding to the second RB. Optionally, if the first RB and the second RB are newly established RBs, the first access network device may further allocate identifiers to the first RB and the second RB.

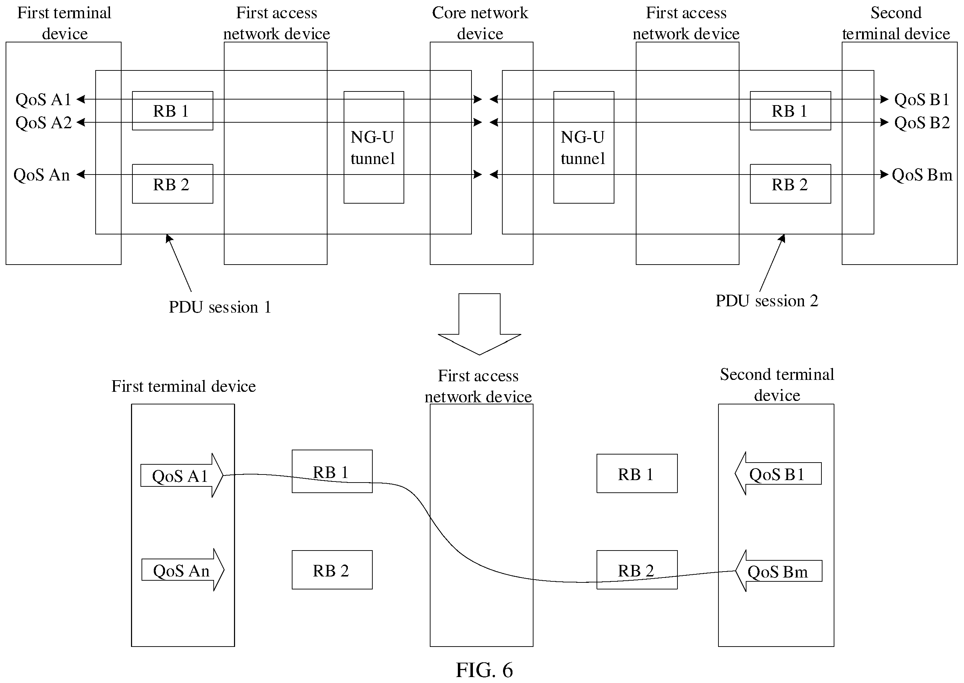

For example, FIG. 6 is a diagram of associating the first RB with the second RB according to an embodiment of this application. In FIG. 6, an example in which both an access network device accessed by the first terminal device and an access network device accessed by the second terminal device are the first access network device is used. As shown in FIG. 6, a PDU session 1 has been established between the first terminal device and the core network device, the PDU session 1 includes an RB 1 and an RB 2, the RB 1 includes a QoS A1 and a QoS A2, and the RB 2 includes a QoS An. A PDU session 2 has been established between the second terminal device and the core network device, the PDU session 2 includes an RB 1 and an RB 2, the RB 1 includes a QoS B1 and a QoS B2, and the RB 2 includes a QoS Bm, where data paths corresponding to the QoS A1 and the QoS Bm are used to transmit a first data packet.

If the first indication information sent by the core network device to the first access network device indicates the first access network device to associate the QoS A1 in the PDU session 1 with the QoS Bm in the PDU session 2, the first access network device may determine that the RB 1 included in the PDU session 1 is the first RB, and determine that the RB 2 included in the PDU session 2 is the second RB, and the first access network device may associate the RB 1 included in the PDU session 1 with the RB 2 included in the PDU session 2.

S503: The first access network device sends an RRC reconfiguration message to the first terminal device and the second terminal device; and correspondingly, the first terminal device and the second terminal device receive the RRC reconfiguration message from the first access network device.

The first access network device may configure the first terminal device to transmit the first data through the first RB, and configure the second terminal device to transmit the first data through the second RB. For example, the RRC reconfiguration message may be used to establish the first RB and the second RB; or if the first RB and the second RB are the reused RBs used to transmit the data of the second service, the RRC reconfiguration message may be further used to configure the first terminal device to reuse the first RB to transmit the first data, and configure the second terminal device to reuse the second RB to transmit the first data.

Optionally, the RRC reconfiguration message may further include the first identifier and/or the second identifier. For example, the RRC reconfiguration message sent by the first access network device to the first terminal device may include the first identifier, or may include the first identifier and the second identifier.

In the foregoing technical solution, the first access network device configures the first RB and the second RB that are used to transmit the first data, and establishes the association relationship between the first RB and the second RB, so that data forwarding is implemented without forwarding the data to the UPF, thereby improving data forwarding efficiency.

FIG. 7 is a flowchart of still another communication method according to an embodiment of this application. In this method, an example in which a first terminal device accesses a first access network device and a second terminal device accesses a second access network device is used.

S701: A core network device sends first indication information to the first access network device; and correspondingly, the first access network device receives the first indication information from the core network device.

For related descriptions of the first indication information, refer to the related descriptions of the first indication information in S501. Details are not described herein again.

S702: The first access network device and the second access network device negotiate a first RB and a second RB that are used to transmit first data.

The first access network device and the second access network device may negotiate the first RB and the second RB based on the first indication information. For example, if the first RB and the second RB that are used to transmit the first data do not exist in the first terminal device and the second terminal device, the first access network device and the second access network device may perform negotiation to establish, for the first terminal device and the second terminal device, the first RB and the second RB that are used to transmit the first data; or if a second service has been transmitted between the first terminal device and the second terminal device, the first access network device and the second access network device may perform negotiation to reuse RBs used to transmit data of the second service, that is, perform negotiation for which the RBs used to transmit the data of the second service are the first RB and the second RB.

Optionally, if the first indication information indicates the first access network device to associate a first QoS flow with a second QoS flow, the first access network device and the second access network device may perform negotiation to determine that an RB corresponding to a first data path corresponding to the first QoS flow is the first RB, and determine that an RB corresponding to a second data path corresponding to the second QoS flow is the second RB. Alternatively, the first access network device and the second access network device may perform negotiation to respectively configure the first RB and the second RB for the first terminal device and the second terminal device. After the first RB and the second RB are configured, the first access network device associates the first QoS flow with the first RB, and the second access network device associates the second QoS flow with the second RB.

Optionally, after the first access network device and the second access network device negotiate the first RB and the second RB that are used to transmit the first data, the first access network device may establish an association relationship between the first RB and the second RB. For a manner in which the first access network device establishes the association relationship between the first RB and the second RB, refer to the related descriptions of establishing the association relationship between the first RB and the second RB by the first access network device in S502. Details are not described herein again.

Optionally, if the first RB and the second RB are configured by the first access network device and the second access network device through negotiation, the first access network device and the second access network device may perform negotiation to allocate identifiers to the first RB and the second RB. For example, the first access network device allocates a first identifier to the first RB, and the second access network device allocates a second identifier to the second RB. Alternatively, the first access network device may allocate the identifiers to the first RB and the second RB. Optionally, the first access network device may further obtain the second identifier allocated by the second access network device to the second terminal device.

S703: The first access network device sends an RRC reconfiguration message to the first terminal device, and the second access network device sends an RRC reconfiguration message to the second terminal device.

For the RRC reconfiguration message sent by the first access network device to the first terminal device and the RRC reconfiguration message sent by the second access network device to the second terminal device, refer to the related descriptions of the RRC reconfiguration message in S503. Details are not described herein again.

Optionally, the core network device may further determine a path used by the first access network device to send the first data to the second access network device, and send first routing information indicating the path to all access network devices included in the path. For example, the first routing information is as follows: the first access network device -> a third access network device -> the second access network device. The core network device may send the first routing information to the first access network device, the second access network device, and the third access network device. The first access network device, the second access network device, and the third access network device may send the first data (for example, the second data packet) to the second terminal device based on the first routing information. For example, after obtaining the second data packet, the first access network device may send the second data packet to the third access network device. After parsing the second data packet to obtain an identifier of the second terminal device, the third access network device may send the second data packet to the second access network device based on the first routing information. Upon receiving the second data packet and obtaining the identifier of the second terminal device, the second access network device may forward the second data packet to the second terminal device.

In the foregoing technical solution, the core network device may configure a forwarding path of the first data, to implement communication between terminal devices through multi-hop forwarding.

The following describes an embodiment. This embodiment is an example of the communication method described in the embodiment in FIG. 3, FIG. 5, or FIG. 7.

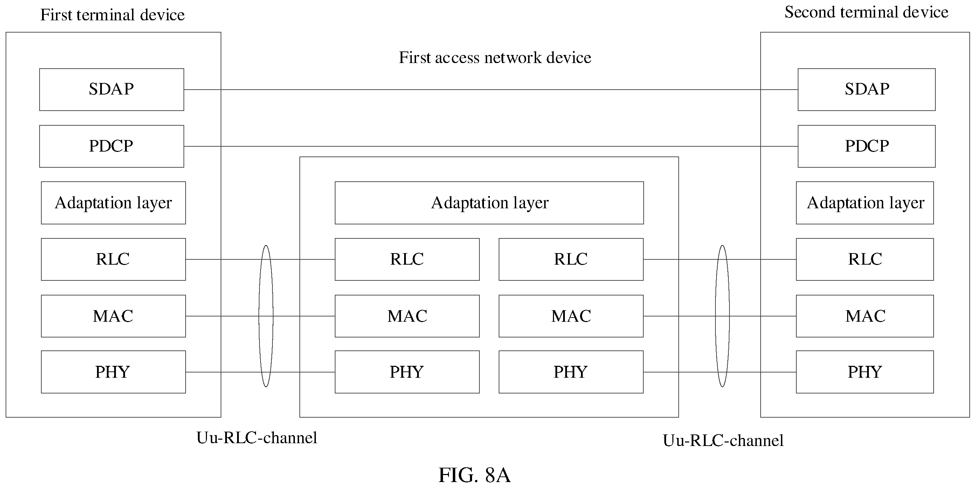

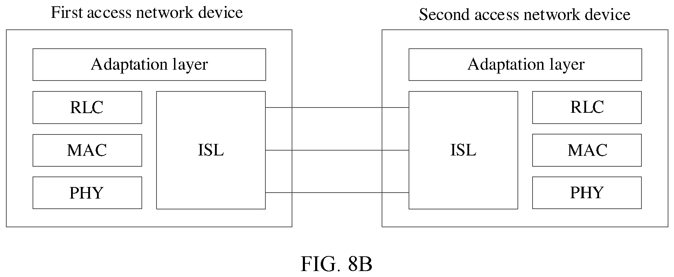

A set of functional entities of a same RB includes an SDAP entity, an SDAP, a PDCP entity, an RLC entity, a MAC entity, and a PHY entity. In this embodiment of this application, upon parsing the first data packet down to an RLC layer, an access network device no longer continues to perform parsing. Therefore, in the example shown in FIG. 8A or FIG. 8B, a PDCP entity and an SDAP entity that are at upper layers of the first access network device and the second access network device are not shown. Optionally, to implement data forwarding through the access network device, the first access network device and the second access network device each may further include an adaptation layer above an RLC layer, for example, an adaptation (adaptation) layer shown in FIG. 8A and FIG. 8B. The adaptation layer may be used to describe an association relationship between identifiers, for example, the association relationship between the first identifier and the second identifier; and the adaptation layer may perform an identifier replacement operation, for example, replace the first identifier included in the header of the first data packet with the second identifier.

Refer to FIG. 8A. When the first terminal device and the second terminal device transmit the first service, the first terminal device may send the first data packet to the first access network device, and then the first access network device sends the first data packet to the second terminal device.

For example, the first terminal device may send, to the first access network device, the first data packet obtained after the first data is processed sequentially through an SDAP entity, a PDCP entity, an RLC entity, a MAC entity, and a PHY entity that correspond to the first RB, where the first data packet includes the first identifier of the first RB.

Upon receiving the first data packet from the first terminal device, the first access network device may obtain the first identifier after the first data packet is processed sequentially through a PHY entity, a MAC entity, and an RLC entity. The adaptation layer of the first access network device may determine, based on the association relationship between the first identifier and the second identifier, to send the first data packet to the second terminal device, replace the first identifier included in the header of the first data packet with the second identifier, and send a data packet (for example, the second data packet) that is with the identifier replaced and that is obtained after being processed sequentially through the RLC entity, the MAC entity, and the PHY entity, to the second terminal device.

Upon receiving the second data packet from the first access network device, the second terminal device may obtain the first data after the second data packet is processed sequentially through a PHY entity, a MAC entity, an RLC entity, a PDCP entity, and an SDAP entity.

The first access network device may further configure the first terminal device and the second terminal device to associate RLC entities, MAC entities, and PHY entities. The associated RLC entities, the associated MAC entities, and the associated PHY entities may be, for example, referred to as a Uu-RLC-channel (Uu-RLC-channel). Therefore, optionally, the first terminal device and the second terminal device each may further include an adaptation layer above an RLC layer. The adaptation layer is used to associate the RLC entity, the MAC entity, and the PHY entity. In other words, the adaptation layer may be used to describe an association relationship between a PDCP and the Uu-RLC-channel. In addition, at the adaptation layer, an identifier of an RB may be further added to a data packet. A function (for example, establishing the association relationship between the PDCP and the Uu-RLC-channel) executed at the adaptation layer of each of the first terminal device and the second terminal device may be configured by the first access network device. For example, the first access network device may perform configuration by using RRC reconfiguration information sent to the first terminal device and the second terminal device. For example, the first access network device may configure the adaptation layer of the first terminal device to associate a PDCP-1 and a PDCP-2 with the Uu-RLC-channel-1. In this way, upon receiving data from the PDCP-1, the adaptation layer may send the data to the first access network device through the Uu-RLC-channel-1.

Optionally, if the second terminal device accesses the second access network device, refer to FIG. 8B. Upon sending the second data packet to the second access network device, the first access network device may send the second data packet to the second access network device through an inter-satellite link (inter-satellite link, ISL).

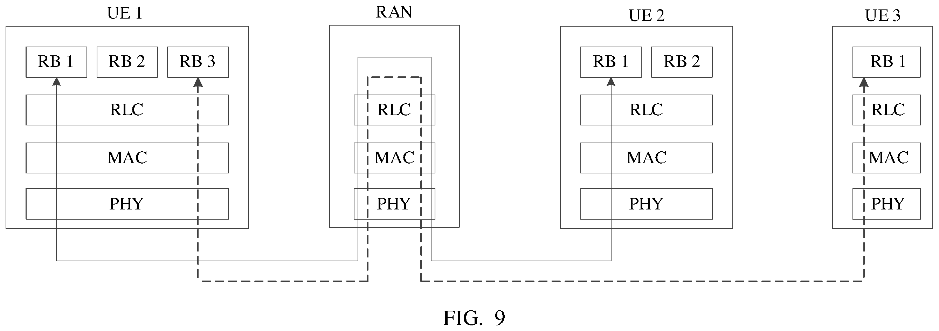

In this embodiment of this application, when the first access network device establishes the first RB and the second RB, the first access network device may configure a PDCP entity and an SDAP entity, and map the configured PDCP entity and the configured SDAP entity to the Uu-RLC-channel that already has an association relationship. In this way, it may be considered that the first identifier and the second identifier are used to identify the PDCP entity and the SDAP entity. For example, with reference to FIG. 9, a RAN configures UE 1 to transmit data 1 with an RB 1 of UE 2 through an RB 1, and configures the UE 1 to transmit data 2 with an RB 1 of UE 3 through an RB 3.

When the UE 1 wants to communicate with the UE 2 to transmit the data 1, after the data 1 is processed through an SDAP entity and a PDCP entity that correspond to the RB 1 of the UE 1, an identifier (for example, an identifier 1) of the RB 1 may be added to a header of a data packet including the data 1 at an adaptation layer (not shown in the figure) of the UE 1. An obtained data packet (for example, a data packet 1) may be sent to the RAN through a Uu-RLC-channel (for example, a Uu-RLC-channel-1) associated with the SDAP entity and PDCP entity that correspond to the RB 1.

When the RAN receives the data packet 1 and obtains the identifier 1, an adaptation layer (not shown in the figure) of the RAN may determine, based on an association relationship between the identifier 1 and an identifier 2, to forward the data to the RB 1 of the UE 2. An identifier of the RB 1 of the UE 2 is the identifier 2. In this case, the adaptation layer of the RAN may replace the identifier 1 in the data packet 1 with the identifier 2 to obtain a data packet 2, and send the obtained data packet 2 to the UE 2 through a Uu-RLC-channel (for example, a Uu-RLC-channel-2).

When the UE 2 receives the data packet 2 and obtains the identifier 2, an adaptation layer (not shown in the figure) of the UE 2 may allocate, based on the identifier 2, the data packet 2 to a PDCP entity and an SDAP entity that correspond to the RB 1 for processing, to obtain the data 1.

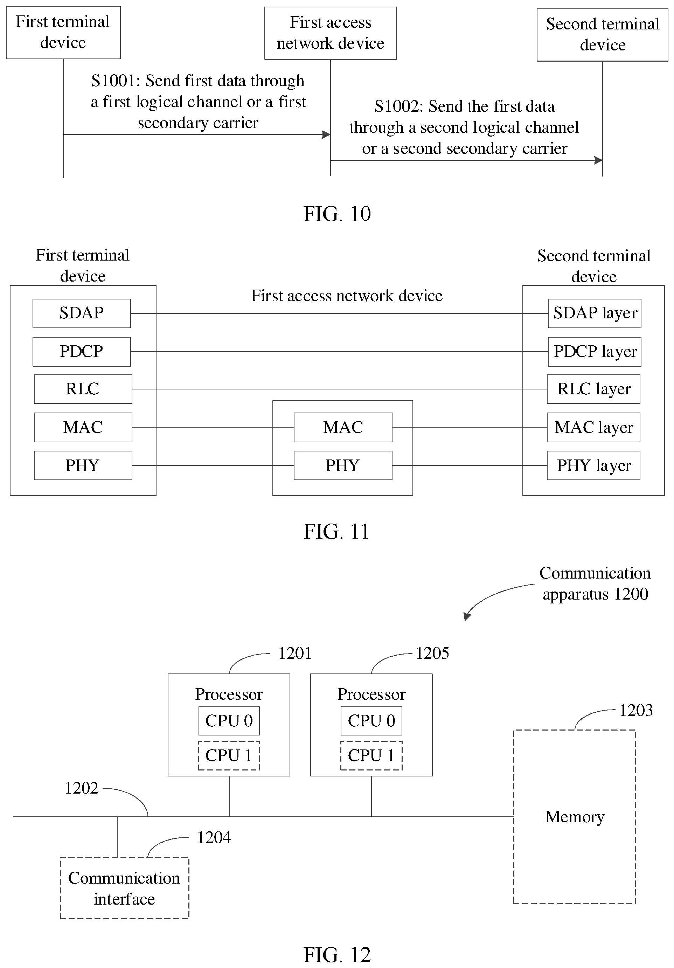

FIG. 10 is a flowchart of still another communication method according to an embodiment of this application. The method may be applied to the network architecture shown in FIG. 2A or FIG. 2B. If the method is applied to the network architecture shown in FIG. 2A or FIG. 2B, in the following descriptions, a terminal device is the terminal device in the network architecture shown in FIG. 2A or FIG. 2B, a first access network device or a second access network device is the access network device in the network architecture shown in FIG. 2A or the 5G base station in the network architecture shown in FIG. 2B, and a core network device is the core network in the network architecture shown in FIG. 2A or the 5G core network in the network architecture shown in FIG. 2B.

S1001: A first terminal device sends first data to the first access network device through a first logical channel or a first secondary carrier; and correspondingly, the first access network device receives the first data from the first logical channel or the first secondary carrier.

The first data may be sent in a data packet (for example, a first data packet), or may be directly sent. If the first data is sent in the first data packet, a format of the first data packet may be the format in the embodiment shown in FIG. 3, or may be another format. This is not limited in this embodiment of this application. In the following embodiment, an example in which the first data is sent in the first data packet is used for description.

The first access network device may configure the first terminal device to transmit the first data packet through the first logical channel or the first secondary carrier. The first logical channel or the first secondary carrier is a logical channel or a secondary carrier that is reserved by the first access network device and that is used to transmit relay data. The relay data is data forwarded by the first access network device to a second terminal device. Therefore, optionally, before S1001 is performed, the first access network device may send an RRC reconfiguration message to the first terminal device, to configure the first terminal device to send the first data through the first logical channel or the first secondary carrier. Optionally, before sending the RRC reconfiguration message to the first terminal device, the first access network device may further receive first indication information from the core network device, where the first indication information indicates the first access network device to send the first data to the second terminal device.

In addition, before S1001 is performed, the first access network device may further send downlink control information (downlink control information, DCI) indication information to the first terminal device and the second terminal device, to indicate information such as a time-frequency resource and a modulation and coding scheme at a PHY layer.

S1002: The first access network device sends the first data to the second terminal device through a second logical channel or a second secondary carrier; and correspondingly, the second terminal device receives the first data from the second logical channel or the second secondary carrier.

Upon receiving the first data packet, the first access network device may determine, based on an identifier of the first logical signal or an identifier of the first secondary carrier (for example, a logical channel ID or a carrier frequency), whether the first data in the first data packet is relay data or service data. The service data is data that needs to be uploaded to the core network device for processing. If the first data is relay data, the first access network device may determine the second logical channel associated with the first logical channel, or determine the second secondary carrier associated with the first secondary carrier, and send the first data packet to the second terminal device through the second logical channel or the second secondary carrier. If the first data is service data, the first access network device may send the first data packet to the core network device, for example, to a UPF or another network element of the core network device.

Optionally, before sending the first data packet to the second terminal device through the second logical channel or the second secondary carrier, the first access network device may further send RRC reconfiguration information to the second terminal device, to configure the second terminal device to transmit the first data through the second logical channel or the second secondary carrier.

For inter-layer data transmission in the communication method shown in FIG. 10, refer to FIG. 11. In FIG. 11, an example in which the first terminal device sends the first data packet to the first access network device through a logical channel is used. As shown in FIG. 11, the first terminal device may send, to the first access network device, the first data packet obtained after the first data is processed sequentially at an SDAP layer, a PDCP layer, an RLC layer, a MAC layer, and a PHY layer. The first data packet includes the identifier of the first logical channel.

Upon receiving the first data packet, the first access network device may obtain the identifier of the first logical channel after the first data packet is processed sequentially at a PHY layer and a MAC layer. The first access network device may determine, based on the identifier, whether the first logical channel is a reserved logical channel used to transmit relay data. If the first logical channel is a reserved logical channel used to transmit relay data, the first access network device may determine the second logical channel associated with the first logical channel, and send the first data packet to the second terminal device through the second logical channel.

After receiving the first data packet from the first access network device, the second terminal device may obtain the first data after the first data packet is processed sequentially at a PHY layer, a MAC layer, an RLC layer, a PDCP layer, and an SDAP layer.

In the foregoing technical solution, the first access network device configures the first terminal device and the second terminal device to transmit different data through different logical channels or different secondary carriers. In this way, upon receiving the first data transmitted through the logical channel or the secondary carrier used to transmit the relay data, the first access network device can forward the data to the second terminal device based on an association relationship between the logical channels or an association relationship between the secondary carriers, and does not need to send the data to the core network device, thereby improving data forwarding efficiency.

FIG. 12 is a diagram of a structure of a communication apparatus according to an embodiment of this application. The communication apparatus 1200 may be the first access network device in the embodiment in any one of FIG. 3 to FIG. 11 or a circuit system of the first access network device, and is configured to implement the method corresponding to the first access network device in the foregoing method embodiments. Alternatively, the communication apparatus 1200 may be the core network device in the embodiment in any one of FIG. 3 to FIG. 11 or a circuit system of the core network device, and is configured to implement the method corresponding to the core network device in the foregoing method embodiments. For a specific function, refer to the descriptions of the foregoing method embodiments. Alternatively, the communication apparatus 1200 may be the first terminal device in the embodiment in any one of FIG. 3 to FIG. 11 or a circuit system of the first terminal device, and is configured to implement the method corresponding to the first terminal device in the foregoing method embodiments. For a specific function, refer to the descriptions of the foregoing method embodiments. For example, a circuit system is a chip system.

The communication apparatus 1200 includes at least one processor 1201. The processor 1201 may be configured for internal processing of the apparatus, to implement a specific control processing function. Optionally, the processor 1201 includes instructions. Optionally, the processor 1201 may store data. Optionally, different processors may be independent devices, and may be located at different physical locations, or may be located on different integrated circuits. Optionally, different processors may be integrated into one or more processors, for example, integrated into one or more integrated circuits.

Optionally, the communication apparatus 1200 includes one or more memories 1203, configured to store instructions. Optionally, the memory 1203 may further store data. The processor and the memory may be separately disposed, or may be integrated together.

Optionally, the communication apparatus 1200 includes a communication line 1202 and at least one communication interface 1204. Because the memory 1203, the communication line 1202, and the communication interface 1204 are all optional, the memory 1203, the communication line 1202, and the communication interface 1204 are all represented by dashed lines in FIG. 12.

Optionally, the communication apparatus 1200 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 1200 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1201 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 1202 may include a path for transmitting information between the foregoing components.

The communication interface 1204 is any apparatus like a transceiver, and is configured to communicate with another device or a communication network, such as an ethernet, a radio access network (radio access network, RAN), a wireless local area network (wireless local area network, WLAN), or a wired access network.

The memory 1203 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact optical disc, a laser disc, an optical disc, a digital versatile disc, a Blu-ray disc, or the like), a magnetic disk storage medium or another magnetic storage device, or any other medium capable of carrying or storing expected program code in a form of instructions or data structures and capable of being accessed by a computer, but is not limited thereto. The memory 1203 may exist independently, and is connected to the processor 1201 through the communication line 1202. Alternatively, the memory 1203 may be integrated with the processor 1201.

The memory 1203 is configured to store computer-executable instructions used to perform the solutions of this application, and the processor 1201 controls execution. The processor 1201 is configured to execute the computer-executable instructions stored in the memory 1203, to implement the steps performed by the first access network device in any one of the embodiments in FIG. 3 to FIG. 11, or implement the steps performed by the core network device in any one of the embodiments in FIG. 3 to FIG. 11, or implement the steps performed by the first terminal device in any one of the embodiments in FIG. 3 to FIG. 11.

Optionally, the computer-executable instructions in embodiments of this application may also be referred to as application code. This is not specifically limited in embodiments of this application.

During specific implementation, in an embodiment, the processor 1201 may include one or more CPUs, for example, a CPU 0 and a CPU 1 in FIG. 12.

During specific implementation, in an embodiment, the communication apparatus 1200 may include a plurality of processors, for example, the processor 1201 and a processor 1205 in FIG. 12. Each of the processors may be a single-core (single-CPU) processor, or may be a multicore (multi-CPU) processor. The processor herein may be one or more devices, circuits, and/or processing cores configured to process data (for example, computer program instructions).

When the apparatus shown in FIG. 12 is a chip, for example, a chip of the first access network device, a chip of the core network device, or a chip of the first terminal device, the chip includes the processor 1201 (may further include the processor 1205), the communication line 1202, the memory 1203, and the communication interface 1204. Specifically, the communication interface 1204 may be an input interface, a pin, a circuit, or the like. The memory 1203 may be a register, a cache, or the like. The processor 1201 and the processor 1205 each may be a general-purpose CPU, a microprocessor, an ASIC, or one or more integrated circuits configured to control program execution of the communication method in any one of the foregoing embodiments.

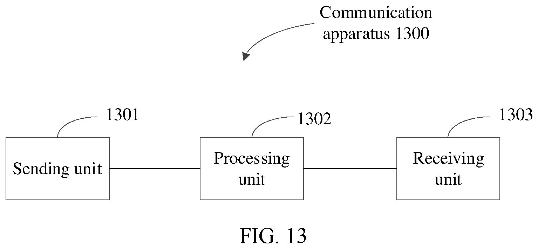

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that module division in embodiments of this application is an example, and is merely logical function division. There may be another division manner during actual implementation. For example, when each functional module is obtained through division based on each corresponding function, FIG. 13 is a diagram of an apparatus. The apparatus 1300 may be the first terminal device, the first access network device, or the core network device in the foregoing method embodiments, or a chip in the first terminal device, the first access network device, or the core network device. The apparatus 1300 includes a sending unit 1301, a processing unit 1302, and a receiving unit 1303.

It should be understood that the apparatus 1300 may be configured to implement the steps performed by the first access network device, the core network device, or the first terminal device in the communication method in embodiments of this application. For related features, refer to the embodiments in FIG. 3 to FIG. 11. Details are not described herein again.

Optionally, functions/implementation processes of the sending unit 1301, the receiving unit 1303, and the processing unit 1302 in FIG. 13 may be implemented by the processor 1201 in FIG. 12 by invoking the computer-executable instructions stored in the memory 1203. Alternatively, a function/implementation process of the processing unit 1302 in FIG. 13 may be implemented by the processor 1201 in FIG. 12 by invoking the computer-executable instructions stored in the memory 1203, and functions/implementation processes of the sending unit 1301 and the receiving unit 1303 in FIG. 13 may be implemented through the communication interface 1204 in FIG. 12.

Optionally, when the apparatus 1300 is a chip or a circuit, functions/implementation processes of the sending unit 1301 and the receiving unit 1303 may be implemented through a pin, a circuit, or the like.

This application further provides a computer-readable storage medium. The computer-readable storage medium stores a computer program or instructions. When the computer program or the instructions are run, the method performed by the first access network device, the core network device, or the first terminal device in the foregoing method embodiment is implemented. In this way, the functions in the foregoing embodiments may be implemented in a form of a software functional unit and sold or used as an independent product. Based on such an understanding, the technical solutions of this application essentially, or the contributing part, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first access network device, the core network device, or the first terminal device in any one of the foregoing method embodiments.

An embodiment of this application further provides a communication apparatus, including a processor and an interface. The processor is configured to perform the method performed by the first access network device, the core network device, or the first terminal device in any one of the foregoing method embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state disk, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic device, a discrete hardware part, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor may read information from the storage medium and write information into the storage medium. Optionally, the storage medium may be integrated into the processor. The processor and the storage medium may be disposed in an ASIC, and the ASIC may be disposed in a terminal device. Optionally, the processor and the storage medium may be disposed in different parts of a terminal device.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logic conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the terminal device, the core network device, and/or the access network device may perform some or all of steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

## Claims

1. A communication method, applied to a first access network device, wherein the method comprises:
receiving a first identifier and first data from a first terminal device, wherein the first identifier is an identifier of a first radio bearer RB, and the first RB is an RB corresponding to the first terminal device; and
sending a second identifier and the first data to a second terminal device or a second access network device based on the first identifier, wherein the second access network device is an access network device accessed by the second terminal device, the second identifier is an identifier of a second RB, and the second RB is an RB corresponding to the second terminal device.

2. The method according to claim 1, wherein the first identifier is associated with the second identifier.

3. The method according to claim 1 or 2, wherein the method further comprises:
receiving first indication information from a core network device, wherein the first indication information indicates the first access network device to send the first data to the second terminal device or the second access network device.

4. The method according to claim 3, wherein that the first indication information indicates the first access network device to send the first data to the second terminal device or the second access network device comprises:
the first indication information indicates that a first data path corresponding to a first quality of service QoS flow is associated with a second data path corresponding to a second QoS flow, and the first data path and the second data path are used to transmit the first data.

5. The method according to claim 4, wherein the first QoS flow is associated with the first RB, and the second QoS flow is associated with the second RB.

6. The method according to claim 3, wherein the method further comprises:
sending the first identifier to the first terminal device.

7. The method according to claim 3 or 6, wherein the method further comprises:
sending the second identifier to the second terminal device.

8. The method according to any one of claims 1 to 7, wherein the method further comprises:
receiving first routing information from the core network device, wherein the first routing information indicates a path used by the first access network device to send the first data to the second terminal device or the second access network device; and
sending the first data to the second terminal device or the second access network device comprises:
sending the first data to the second terminal device or the second access network device based on the first routing information.

9. The method according to any one of claims 1 to 8, wherein the method further comprises:
receiving a third identifier from the first terminal device, wherein the third identifier is an identifier of the second terminal device.

10. A communication method, applied to a core network device, wherein the method comprises:
sending first indication information to a first access network device, wherein the first indication information indicates the first access network device to send first data to a second terminal device or a second access network device, and the second access network device is an access network device accessed by the second terminal device.

11. The method according to claim 10, wherein that the first indication information indicates the first access network device to send the first data to the second terminal device or the second access network device comprises:
the first indication information indicates that a first data path corresponding to a first QoS flow is associated with a second data path corresponding to a second QoS flow, and the first data path and the second data path are used to transmit the first data.

12. The method according to claim 11, wherein the method further comprises:
sending the first indication information to a first terminal device and the second terminal device.

13. The method according to any one of claims 10 to 12, wherein the method further comprises:
determining first routing information used by the first access network device to send the first data to the second terminal device or the second access network device.

14. The method according to claim 13, wherein the method further comprises:
sending the first routing information to an access network device indicated by the first routing information, wherein the access network device indicated by the first routing information comprises the first access network device.

15. A communication method, applied to a first terminal device, wherein the method comprises:
sending a first identifier and first data to a first access network device, wherein the first identifier is an identifier of a first RB, and the first RB is an RB corresponding to the first terminal device.

16. The method according to claim 15, wherein the method further comprises:
receiving the first identifier from the first access network device.

17. The method according to claim 15 or 16, wherein the method further comprises:
receiving first indication information from a core network device, wherein the first indication information indicates that a first data path corresponding to a first QoS flow is associated with a second data path corresponding to a second QoS flow, and the first data path and the second data path are used to transmit the first data.

18. A communication method, applied to a first access network device, wherein the method comprises:
receiving first data sent by a first terminal device through a first logical channel or a first secondary carrier; and
sending the first data to a second terminal device through a second logical channel or a second secondary carrier, wherein the first logical channel is associated with the second logical channel, and the first secondary carrier is associated with the second secondary carrier.

19. The method according to claim 18, wherein the method further comprises:
receiving first indication information from a core network device, wherein the first indication information indicates the first access network device to send the first data to the second terminal device.

20. A communication method, applied to a core network device, wherein the method comprises:
sending first indication information to a first access network device, wherein the first indication information indicates the first access network device to send first data to a second terminal device or a second access network device, and the second access network device is an access network device accessed by the second terminal device.

21. A communication method, applied to a first terminal device, wherein the method comprises:
sending first data to a first access network device through a first logical channel or a first secondary carrier, wherein the first logical channel or the first secondary carrier is a logical channel or a secondary carrier that is configured by the first access network device and that is used to send the first data to a second terminal device.

22. A communication system, comprising a first access network device configured to perform the method according to any one of claims 1 to 9 and 18 and 19, a core network device configured to perform the method according to any one of claims 10 to 14 and 20, and a first terminal device configured to perform the method according to any one of claims 15 to 17 and 21.

23. A communication apparatus, comprising a processor and a memory, wherein the memory is coupled to the processor, and the processor is configured to invoke computer instructions in the memory to perform the method according to any one of claims 1 to 9 and 18 and 19, or perform the method according to any one of claims 10 to 14 and 20, or perform the method according to any one of claims 15 to 17 and 21.

24. A computer-readable storage medium, comprising a computer program, wherein when the computer program is run on a computer, the computer is enabled to perform the method according to any one of claims 1 to 9 and 18 and 19, or the computer is enabled to perform the method according to any one of claims 10 to 14 and 20, or the computer is enabled to perform the method according to any one of claims 15 to 17 and 21.

25. A computer program product, wherein when the computer program product runs on a computer, the computer is enabled to perform the method according to any one of claims 1 to 9 and 18 and 19, or the computer is enabled to perform the method according to any one of claims 10 to 14 and 20, or the computer is enabled to perform the method according to any one of claims 15 to 17 and 21.

26. A chip system, comprising a processor, configured to: invoke a computer program from a memory and run the computer program, so that the method according to any one of claims 1 to 9 and 18 to 19 is implemented, or the method according to any one of claims 10 to 14 and 20 is implemented, or the method according to any one of claims 15 to 17 and 21 is implemented.
